# EUROPÄISCHE PATENTSCHRIFT

(11) **EP 3 678 882 B1**
(45) Veröffentlichungstag und Bekanntmachung des Hinweises auf die Patenterteilung: **09.06.2021**
(21) Anmeldenummer: 18769117.5
(22) Anmeldetag: 05.09.2018
(51) Int. Cl.: B60K 6/48, B60K 6/36, B60K 6/365, B60K 6/547, F16H 3/00, F16H 3/089

(54) **HYBRIDANTRIEBSSTRANG FÜR EIN HYBRIDGETRIEBENES KRAFTFAHRZEUG**
HYBRID DRIVE TRAIN FOR A HYBRID MOTOR VEHICLE
GROUPE MOTOPROPULSEUR HYBRIDE D'UN VÉHICULE AUTOMOBILE À PROPULSION HYBRIDE

(30) Priorität: 06.09.2017 DE 102017215674
(43) Veröffentlichungstag der Anmeldung: 15.07.2020
(73) Patentinhaber: Audi AG, 85045 Ingolstadt (DE)
(72) Erfinder: HUMMEL, Steffen, 71287 Flacht (DE)
(86) Internationale Anmeldenummer: PCT/EP2018/073853
(87) Internationale Veröffentlichungsnummer: WO 2019/048469

(56) Entgegenhaltungen:
- DE-A1-102015 201 458
- DE-A1-102015 208 756
- US-A1- 2014 171 259
- US-A1- 2016 082 822

## Beschreibung

Die Erfindung betrifft einen Hybridantriebsstrang für ein hybridgetriebenes Kraftfahrzeug nach dem Oberbegriff des Patentanspruches 1.

Ein solcher Hybridantriebsstrang kann einen Triebstranggenerator, etwa eine 48V-Elektromaschine, aufweisen, die für einen rein elektromotorischen Fahrbetrieb sowie für eine Rekuperation ausgelegt ist. Die rekuperierte Energie kann ggf. über das Fahrzeug-Bordnetz zum Beispiel für einen elektronischen Klimakompressor abrufbar sein.

Aus der DE 10 2012 203 365 A1 ist ein Hybridantriebsstrang mit einer Elektromaschine und einer Brennkraftmaschine bekannt. Deren Kraftabgabewelle treibt über zwei Trennkupplungen einer Doppelkupplung alternierend auf eine erste Eingangswelle und auf eine dazu koaxiale zweite Eingangswelle eines Doppelkupplungsgetriebe ab, mit denen jeweils ein Teilgetriebe aktivierbar ist. Auf den beiden Eingangswellen und einer dazu achsparallelen gemeinsamen Abtriebswelle sind in Radebenen jeweils Fest- und Loszahnräder angeordnet, die unter Bildung von Gangstufen zu Zahnradsätzen zusammengefasst sind. In den Zahnradsätzen sind die Loszahnräder mittels Schaltelementen mit den obigen Wellen koppelbar. Die Elektromaschine kann über ein Vorgelege direkt auf eine der Eingangswellen wirken. Zudem ist zwischen der Elektromaschine und der damit zusammenwirkenden Eingangswelle (nachfolgend als elektromaschinenseitige Eingangswelle bezeichnet) ein elektromaschinenseitiges Schaltelement zwischengeschaltet. Das elektromaschinenseitige Schaltelement koppelt in einer ersten Schaltstellung die Elektromaschine mit der damit zusammenwirkenden Eingangswelle des Doppelkupplungsgetriebes. In einer Neutralstellung des Schaltelementes ist dagegen die Elektromaschine trieblich vom Doppelkupplungsgetriebe entkoppelt.

Zudem weist das Doppelkupplungsgetriebe in der DE 10 2012 203 365 A1 weitere Schaltelemente auf, mit deren Hilfe die Elektromaschine mit der zweiten Eingangswelle und/oder mit weiteren Vorgelegewellen des Doppelkupplungsgetriebes koppelbar ist.

Aus der US 2014/171 259 A1 ist ein gattungsgemäßes, elektrisches Hybridmodul für ein Doppelkupplungsgetriebe bekannt. Aus der US 2016/082822 A1 ist ein Getriebe für ein elektrisches Hybridfahrzeug bekannt. Aus der DE 10 2015 208 756 A1 ist eine Getriebeeinrichtung für ein Hybridantriebssystem bekannt. Aus der DE 10 2015 201 458 A1 ist ein Hybrid-Antriebsstrang für ein Kraftfahrzeug bekannt.

Die Aufgabe der Erfindung besteht darin, einen Hybridantriebsstrang bereitzustellen, bei dem die Elektromaschine im Vergleich zum Stand der Technik baulich einfacher sowie bauraumgünstiger in unterschiedlicher Weise mit dem Doppelkupplungsgetriebe koppelbar ist.

Die Aufgabe ist durch die Merkmale des Anspruches 1 gelöst. Bevorzugte Weiterbildungen der Erfindung sind in den Unteransprüchen offenbart.

Gemäß dem Patentanspruch 1 kann das elektromaschinenseitige Schaltelement nicht nur in einer ersten Schaltstellung die Elektromaschine mit der damit zusammenwirkenden Eingangswelle koppeln sowie in einer Neutralstellung die Elektromaschine vom Doppelkupplungsgetriebe entkoppeln. Zusätzlich ist das elektromaschinenseitige Schaltelement auch in eine zweite Schaltstellung schaltbar, in der die Elektromaschine mit der Abtriebswelle gekoppelt ist und gleichzeitig von der Antriebsseite des Doppelkupplungsgetriebes abgekoppelt ist.

Auf diese Weise ist die Elektromaschine sowohl radseitig (das heißt abtriebsseitig an die Abtriebswelle), antriebsseitig (das heißt an eine der Eingangswellen des Doppelkupplungsgetriebes) als auch komplett abkoppelbar an das Doppelkupplungsgetriebe anbindbar, und zwar konstruktiv einfach sowie bauraumgünstig mit nur genau einem Schaltelement.

In einer technischen Umsetzung kann das Vorgelege der Elektromaschine ein von sämtlichen Gangstufen separater Zahnradsatz sein, bevorzugt eine Planetengetriebestufe und/oder eine Stirnradstufe. Erfindungsgemäß ist das elektromaschinenseitige Schaltelement unmittelbar auf der elektromaschinenseitigen Eingangswelle angeordnet. Es ist außerdem erfindungsgemäß, wenn das elektromaschinenseitige Schaltelement in der Axialrichtung betrachtet aus seiner Neutralstellung beidseitig in die erste Schaltstellung schaltbar oder dazu gegenläufig in die zweite Schaltstellung schaltbar ist.

Erfindungsgemäß grenzt an dem elektromaschinenseitigen Schaltelement in der Axialrichtung unmittelbar eine, eine Gangstufe bildende, Radebene (nachfolgend als elektromaschinenseitige Radebene bezeichnet) an. Diese weist ein auf der elektromaschinenseitigen Eingangswelle drehgelagertes Loszahnrad auf. Das Loszahnrad der elektromaschinenseitigen Radebene ist für eine herkömmliche Gangschaltung mittels eines Gangschaltelementes mit der elektromaschinenseitigen Eingangswelle gekoppelt. Zusätzlich erfolgt mittels des Loszahnrads der elektromaschinenseitigen Radebene auch eine Elektromaschinen-Anbindung an die Abtriebswelle: In diesem Fall ist das Loszahnrad der elektromaschinenseitigen Radebene mittels des elektromaschinenseitigen Schaltelementes (befindet sich in der zweiten Schaltstellung) mit der Elektromaschine koppelbar. Dabei ist es im Hinblick auf eine kompakte Anordnung bevorzugt, wenn das obige Gangschaltelement und das elektromaschinenseitige Schaltelement an axial gegenüberliegenden Seiten des Loszahnrads der elektromaschinenseitigen Radebene positioniert sind.

In dem oben erwähnten Doppelkupplungsgetriebe sind das erste Teilgetriebe und das zweite Teilgetriebe bevorzugt in der Axialrichtung nebeneinander angeordnet. Das erste Teilgetriebe kann unter Zwischenlage des zweiten Teilgetriebes axial von der Doppelkupplung beabstandet sein. Die erste Eingangswelle kann in diesem Fall eine Eingangsvollwelle sein, die sich koaxial innerhalb der als Eingangshohlwelle ausgebildeten zweiten Eingangswelle erstreckt. Bevorzugt können dem ersten Teilgetriebe sämtliche ungerade Vorwärtsgänge zugeordnet sein, während dem zweiten Teilgetriebe sämtliche geraden Vorwärtsgänge zugeordnet sein können, die über entsprechende Schaltelemente schaltbar sind.

Beispielhaft kann das Doppelkupplungsgetriebe ein an sich bekanntes Sieben-Gangschaltgetriebe sein, bei dem exemplarisch die im ersten Teilgetriebe angeordnete Radebene für die siebte Gangstufe oder für die fünfte Gangstufe als elektromaschinenseitige Radebene wirkt, die mit dem Vorgelege der Elektromaschine koppelbar ist.

Das elektromaschinenseitige Schaltelement kann bauraumgünstig zwischen einer in der Axialrichtung äußeren, eine Gangstufe bildenden Radebene (das heißt die elektromaschinenseitige Radebene) und dem Vorgelege der Elektromaschine angeordnet sein. In dem obigen Doppelkupplungsgetriebe können sämtliche Radebenen axial hintereinander angeordnet sein, wobei an einem axial äußeren Getriebeende die Doppelkupplung angeordnet ist und die Elektromaschine, gegebenenfalls mitsamt Vorgelege, an einem dazu gegenüberliegenden axial äußeren Getriebeende angeordnet sein kann.

Im Hinblick auf eine bauraumgünstige Anordnung ist es bevorzugt, wenn die Elektromaschine mit ihrer Elektromaschinenwelle koaxial zur elektromaschinenseitigen Eingangswelle oder koaxial zur gemeinsamen Abtriebswelle des Doppelkupplungsgetriebes angeordnet ist. Die Elektromaschinenwelle kann als eine Hohlwelle realisiert sein, die auf der elektromaschinenseitigen Eingangswelle oder auf der gemeinsamen Abtriebswelle koaxial gelagert ist.

Das Vorgelege kann in einer ersten Ausführungsvariante eine Planetengetriebestufe mit einem Sonnenrad sowie mit einem radial äußeren Hohlrad und zwischengeordneten Planetenrädern aufweisen.

Der umlaufende Rotor der Elektromaschine kann in gängiger Praxis über einen Antriebsflansch mit der Elektromaschinenwelle drehfest verbunden sein. Neben dem Antriebsflansch kann auch ein Sonnenrad des Vorgeleges-Planetengetriebes drehfest auf der Elektromaschinenwelle angeordnet sein. In diesem Fall kann das radial äußere Hohlrad der Planetengetriebestufe gehäusefest angeordnet sein und der, die Planetenräder tragende Steg mittels des elektromaschinenseitigen Schaltelementes entweder mit der elektromaschinenseitigen Eingangswelle oder mit der Abtriebswelle koppelbar sein.

In einer weiteren Ausführungsform kann die Elektromaschinenwelle nicht koaxial auf der elektromaschinenseitigen Eingangswelle gelagert sein, sondern vielmehr koaxial auf der gemeinsamen Abtriebswelle gelagert sein. In diesem Fall kann die Elektromaschinenwelle über das Vorgelege sowie über das elektromaschinenseitige Schaltelement in Wirkverbindung mit der elektromaschinenseitigen Eingangswelle gebracht werden. In einer technischen Ausführung kann dabei das Vorgelege eine Stirnradstufe aufweisen, deren antriebsseitiges Zahnrad als ein Loszahnrad auf der elektromaschinenseitige Eingangswelle drehgelagert ist. Mit Hilfe des elektromaschinenseitigen Schaltelementes kann das antriebsseitige Loszahnrad der Stirnradstufe entweder mit der elektromaschinenseitigen Eingangswelle oder (über die elektromaschinenseitige Radebene RE8) mit der Abtriebswelle gekoppelt werden.

In einer weiteren Ausführungsform kann das Vorgelege der Elektromaschine sowohl die oben erwähnte Stirnradstufe als auch die Planetengetriebestufe aufweisen. In diesem Fall kann der Steg der Planetengetriebestufe mit einem koaxial auf der Abtriebswelle gelagerten, abtriebsseitigen Loszahnrad der Stirnradstufe drehfest verbunden sein.

Alternativ dazu kann das Vorgelege ausschließlich die Stirnradstufe (das heißt ohne Planetengetriebestufe) aufweisen. In diesem Fall kann ein abtriebsseitiges Zahnrad der Stirnradstufe als ein Festzahnrad drehfest auf der (auf der Abtriebswelle gelagerten) Elektromaschinenwelle angeordnet sein. Nachfolgend sind Ausführungsbeispiele der Erfindung anhand der beigefügten Figuren beschrieben.

Es zeigen:
- Figur 1: eine Getriebestruktur des Doppelkupplungsgetriebes gemäß einem ersten Ausführungsbeispiel;
- Figur 2 bis 4: jeweils Ansichten entsprechend der Figur 1 gemäß weiteren Ausführungsbeispielen der Erfindung.

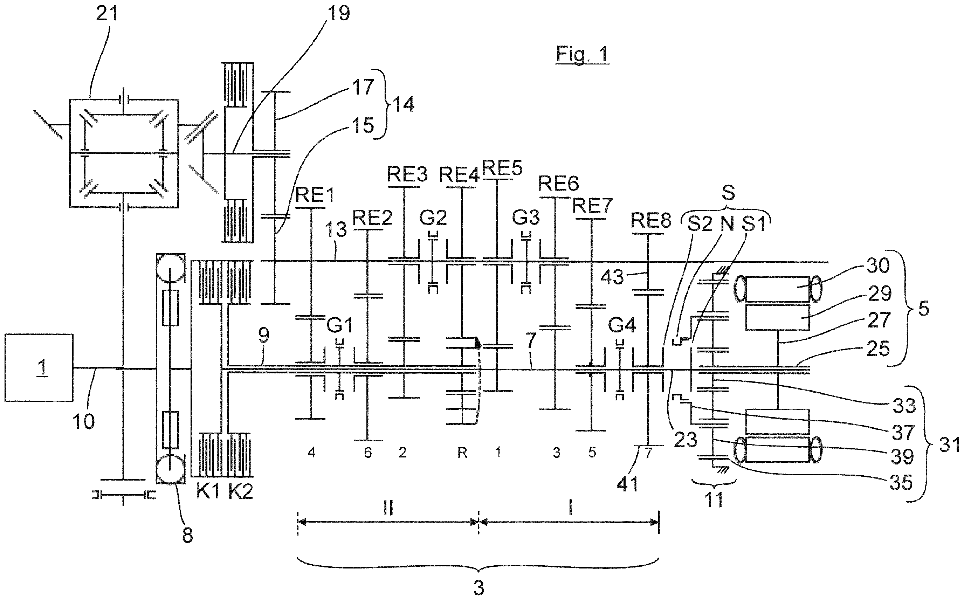

In der Figur 1 ist ein Hybridantriebsstrang für ein hybridgetriebenes Fahrzeug gezeigt, der sich im Wesentlichen aus einer Brennkraftmaschine 1, einem Doppelkupplungsgetriebe 3 und einer Elektromaschine 5 zusammensetzt. Das Doppelkupplungsgetriebe 3 weist eine erste Eingangswelle 7 und eine zweite Eingangswelle 9 auf, die koaxial angeordnet sind und die über zwei zum Beispiel hydraulisch betätigbare Lamellenkupplungen K1, K2 über einen vorgeschalteten Drehschwingungsdämpfer 8 alternierend mit einer Brennkraftmaschinenwelle 10 momentenübertragend verbindbar sind. Die erste Eingangswelle 7 ist in der Figur 1 als eine Vollwelle realisiert, die koaxial innerhalb der als Hohlwelle realisierten zweiten Eingangswelle 9 geführt ist.

Das Doppelkupplungsgetriebe 3 weist in der Figur 1 beispielhaft insgesamt sieben Vorwärtsgänge und einen Rückwärtsgang auf. Diese sind in Radebenen RE1 bis RE8 durch entsprechende Zahnradsätze mit jeweils einem Loszahnrad und einem Festzahnrad realisiert, die in bekannter Weise über insgesamt vier Gangschaltelemente G1 bis G4 (das heißt zum Beispiel Doppelsynchronkupplungen) schaltbar sind. Die abtreibenden Zahnräder der, die Gangstufen bildenden Radebenen RE1 bis RE8 sind allesamt auf einer gemeinsamen achsparallelen Abtriebswelle 13 angeordnet. Die Abtriebswelle 13 treibt über eine Zahnradstufe 14 mit Stirnzahnrädern 15, 17 eine Antriebswelle 19 eines Achsdifferenzials 21 an.

Mittels der ersten und zweiten Eingangswelle 7, 9 kann jeweils ein erstes Teilgetriebe I und ein zweites Teilgetriebe II des Doppelkupplungsgetriebes 3 aktiviert werden. Dem ersten Teilgetriebe I sind sämtliche ungeraden Vorwärtsgänge 1, 3, 5, 7 zugeordnet, während dem zweiten Teilgetriebe II sämtliche geraden Vorwärtsgänge 2, 4, 6 sowie ein Rückwärtsgang R zugeordnet sind. Entsprechend sind die ungeraden Vorwärtsgänge 1, 3, 5, 7 über die erste Eingangswelle 7 sowie mittels der ersten Trennkupplung K1 aktivierbar. Demgegenüber sind die geraden Vorwärtsgänge 2, 4, 6 des zweiten Teilgetriebes II sowie dessen Rückwärtsgang über die hohle zweite Eingangswelle 9 sowie mittels der zweiten Trennkupplung K2 aktivierbar.

Das erste Teilgetriebe I ist in der Figur 1, in der Axialrichtung betrachtet, unter Zwischenlage des Teilgetriebes II axial von der Doppelkupplung K1, K2 beabstandet, die in der Figur 1 am linken äußeren Getriebeende angeordnet ist. Am gegenüberliegenden rechten axial äußeren Getriebeende des Doppelkupplungsgetriebes 3 ist die Elektromaschine 5 positioniert. Der Elektromaschine 5 ist ein Vorgelege 11 für eine Drehmomentwandlung vorgelagert.

Wie aus der Figur 1 weiter hervorgeht, ist die erste Eingangswelle 7 in der Axialrichtung betrachtet über das erste Teilgetriebe I hinaus mit einem Endstück 23 verlängert, auf dem eine als Hohlwelle realisierte Elektromaschinenwelle 25 koaxial gelagert ist. Die Elektromaschinenhohlwelle 25 ist über einen Antriebsflansch 27 mit einem Rotor 29 der Elektromaschine 5 drehfest in Verbindung, der wiederum mit einem Stator 30 der Elektromaschine 5 zusammenwirkt. In der Figur 1 weist das Vorgelege 11 der Elektromaschine 5 ein Planetengetriebe 31 auf, dessen Sonnenrad 33 drehfest auf der Elektromaschinenhohlwelle 25 angeordnet ist. Das radial äußere Hohlrad 35 ist gehäusefest gehalten, wobei ein die Planetenräder 39 tragender Steg 37 über ein elektromaschinenseitiges Schaltelement S entweder mit der ersten Eingangswelle 7 (nachfolgend auch als elektromaschinenseitige Eingangswelle bezeichnet) oder mit der Abtriebswelle 13 koppelbar oder vom Doppelkupplungsgetriebe 3 komplett entkoppelbar ist.

Wie aus der Figur 1 hervorgeht, ist das elektromaschinenseitige Schaltelement S aus seiner Neutralstellung N in Axialrichtung beidseitig entweder in eine erste Schaltstellung S1 oder gegenläufig dazu in eine zweite Schaltstellung S2 schaltbar. Das elektromaschinenseitige Schaltelement S ist in der Axialrichtung betrachtet zwischen dem Vorgelege 11 und einer unmittelbar angrenzenden Radebene RE8 (das heißt elektromaschinenseitige Radebene) positioniert, die in der Figur 1 die siebte Gangstufe bildet. Die elektromaschinenseitige Radebene RE8 weist ein auf der ersten Eingangswelle 7 drehgelagertes antriebsseitiges Loszahnrad 41 auf, das mit einem abtriebsseitigen Festzahnrad 43 auf der Abtriebswelle 13 kämmt. Für eine herkömmliche Gangschaltung ist das Loszahnrad 41 mittels eines zugeordneten Gangschaltelementes G4 mit der elektromaschinenseitigen Eingangswelle 7 koppelbar.

In Doppelfunktion zu einer solchen herkömmlichen Gangschaltung ist das Loszahnrad 41 der elektromaschinenseitigen Radebene RE8 zusätzlich auch Bestandteil einer abtriebsseitigen Elektromaschinen-Anbindung an die Abtriebswelle 13. Für eine solche Elektromaschinen-Anbindung an die Abtriebswelle 13 ist das elektromaschinenseitige Schaltelement S in seine zweite Schaltstellung S2 geschaltet, in der der Steg 37 des Planetengetriebes 31 des Vorgeleges 11 mit dem antriebsseitigen Loszahnrad 41 der elektromaschinenseitigen Radebene RE8 gekoppelt ist.

Alternativ dazu ist in der ersten Schaltstellung S1 der Steg 37 des Planetengetriebes 31 des Vorgeleges 11 mit der elektromaschinenseitigen Eingangswelle 7 gekoppelt, wodurch eine antriebsseitige Elektromaschinen-Anbindung an die elektromaschinenseitige Eingangswelle 7 bereitgestellt ist.

Die oben definierte radseitige bzw. abtriebsseitige Elektromaschinen-Anbindung (in der Schaltstellung S2 des elektromaschinenseitigen Schaltelements S) weist die folgenden Vorteile auf: So ist eine optimale Übersetzung für die Rekuperation gewährleistet (Betriebspunkt der Elektromaschine 5 hinsichtlich Leistung und Wirkungsgrad über einen großen Geschwindigkeitsbereich). Zudem ist ein guter Wirkungsgrad für die Rekuperation gewährleistet (keine Schleppverluste der Trennkupplungen K1, K2 und der Eingangswellen 7, 9 des Doppelkupplungsgetriebes 3). Ferner ist ein Boost-Betrieb in einem niedrigen Drehmoment-Bereich ("low torque end") und eine Verbesserung der Spontanität im Zug, auch bei Zug-Rückschaltungen oder Kickdown und Mehrfachrückschaltungen gewährleistet. Außerdem ist bei der radseitigen Elektromaschinen-Anbindung ein energieeffizienter Fahrbetrieb gewährleistet, da nicht erforderliche Getriebe-Komponenten, etwa Ölpumpen, Steuergerät, Getriebehydraulik oder Schaltelemente deaktiviert (das heißt stromlos geschaltet) werden können. Ein weiterer Vorteil der obigen radseitigen Elektromaschinen-Anbindung ist die ständige Verfügbarkeit der Elektromaschine 5, das heißt die Aktivierung der Elektromaschine 5 ist nicht gebunden an den aktuellen Fahrgang im Doppelkupplungsgetriebe 3. Zudem ergibt sich kein Konflikt mit der Vorwahl der Gänge (auch wenn diese dann nicht geschaltet werden). Dadurch wird der nutzbare / verfügbare Zeitanteil des Triebstranggenerators nicht eingeschränkt. Ebenso wenig ergibt sich ein Konflikt mit der Kupplungsadaption, das heißt der nutzbare / verfügbare Zeitanteil des Triebstranggenerators wird nicht eingeschränkt. Ferner ergibt sich keine Beeinträchtigung der Kupplungsadaption (hohe Trägheit würde das Anlernen des Kisspoint der Kupplung K1, K2 erschweren).

Die oben definierte antriebsseitige Elektromaschinen-Anbindung (in der ersten Schaltstellung S1 des elektromaschinenseitigen Schaltelements S) weist die folgenden Vorteile auf: So ist mit der antriebsseitigen Elektromaschinen-Anbindung ein elektromotorischer Fahrbetrieb ermöglicht (zum Beispiel Parkpilot, Staupilot, elektrisches Kriechen). Zudem ist ein Boost-Betrieb im niedrigen Drehmomentbereich ("Boosten im low torque end") sowie eine Verbesserung der Spontanität bei Kickdown gewährleistet. Ferner ist eine optimale Übersetzung für die Darstellung der Fahrfunktionen (Betriebspunkt der Elektromaschine 5 hinsichtlich Drehmoment und Leistung bei niedrigen Fahrgeschwindigkeiten) ermöglicht. Außerdem ist ein Segel-Betrieb sowie ein Brennkraftmaschinen-Start und ein Brennkraftmaschinen-Zustart sowie ein Kaltstart ermöglicht. Mit der antriebsseitigen Elektromaschinen-Anbindung kann zudem eine Unterstützung bei der Synchronisierung im Doppelkupplungsgetriebe erfolgen. Darüber hinaus sind mehrere Anbindungsmöglichkeiten von der ersten Eingangswelle 7 an die Abtriebswelle 13 (über 1., 3. und 5.Gang) bereitgestellt.

Die Abkoppelung der Elektromaschine 5 vom Doppelkupplungsgetriebe 3 (in der Neutralstellung N des elektromaschinenseitigen Schaltelements S) weist die folgenden Vorteile auf: So muss die Übersetzung der Elektromaschinen-Anbindung nicht auf die Maximaldrehzahl der Brennkraftmaschine 1 ausgelegt werden, so dass sich kein Überdrehen der Elektromaschine 5 (1.Gang + Stufensprung 1-2) ergibt. Ferner kann das Doppelkupplungsgetriebe 3 wirkungsgradoptimal betrieben werden, da keine "bremsende" Trägheit in Betriebszuständen vorhanden ist, in denen das Fahrzeug die Elektromaschine 5 nicht benutzt (Autobahn, Batterie SOC-Halt, Kälte, Batterie leer). Außerdem ist der Fahrbetrieb energieeffizient, da keine Selbstsynchronisierung notwendig ist. Zudem ergibt sich eine Entlastung der Synchronisierung durch Entkoppelung der Trägheit, wenn die Elektromaschine 5 nicht verfügbar ist (SOC-Halt, Batterie leer, Kälte). Weiterhin ergibt sich ein verkürzter Bremsweg durch die Entkoppelung der Trägheit bei Vollbremsungen sowie eine Entlastung der Betriebsbremse durch Abkoppelung der Elektromaschinen-Trägheit (Batterie voll, Kälte). Darüber hinaus wird die Schaltbarkeit verbessert, das heißt, dass das Gangkratzen beim Durchschalten nach der Freiflugphase reduziert bzw. verhindert wird.

Nachfolgend sind spezielle Fahrbetriebsarten hervorgehoben, die mittels des in der Figur 1 gezeigten Doppelkupplungsgetriebes 3 realisierbar sind:

So ist mit der in der Figur 1 gezeigten Getriebestruktur ein Rekuperations-/Segel-/Boost-Betrieb ermöglicht, bei dem die erste Eingangswelle 7 komplett vom Fahrbetrieb abgekoppelt ist, wodurch sich Schleppverluste reduzieren. In diesem Fall ist das elektromaschinenseitige Schaltelement S in seine zweite Schaltstellung S2 geschaltet (das heißt radseitige bzw. abtriebsseitige Elektromaschinen-Anbindung). Daraus resultiert im Boost-Betrieb ein Momentenfluss von der Elektromaschine 5 über deren Elektromaschinenwelle 25, dem Vorgelege 11 sowie über das in die zweite Schaltstellung S2 geschaltete Schaltelement S und die elektromaschinenseitige Radebene RE8 zur Abtriebswelle 13 und weiter über die Zahnradstufe 14 zum Achsdifferenzial 21. Im Rekuperations-Betrieb ergibt sich dagegen ein gegenläufiger Momentenfluss vom Achsdifferenzial 21 zur Elektromaschine 5. Beim Segel-Betrieb können gegebenenfalls die Gangschaltelemente G1 bis G4 in ihrer Neutralstellung sein. Zudem können gegebenenfalls die Kupplungen K1, K2 geöffnet sein und/oder kann die Brennkraftmaschine 1 gegebenenfalls ausgeschaltet sein.

Zudem ist mit Hilfe der Elektromaschine 5 ein Kaltstart bzw. ein Brennkraftmaschinen-Start durchführbar. In diesem Fall ist das elektromaschinenseitige Schaltelement S in seine erste Schaltstellung S1 geschaltet, während sämtliche Gangschaltelemente G1 bis G4 in ihrer Neutralstellung verbleiben und die der ersten Eingangswelle 7 zugeordnete erste Trennkupplung K1 betätigt ist. Dies resultiert in einen Momentenfluss von der Elektromaschine 5 über deren Elektromaschinenwelle 25, dem Vorgelege 11 sowie über das in die erste Schaltstellung S1 geschaltete Schaltelement S in die elektromaschinenseitige Eingangswelle 7, weiter über die betätigte Trennkupplung K1 und die Brennkraftmaschinenwelle 10 in die Brennkraftmaschine 1. Der obige Brennkraftmaschinen-Start ist gegebenenfalls mit einem elektromotorischen Fahrbetrieb kombinierbar, bei dem zum Beispiel zusätzlich die, den dritten Gang bildende Radebene RE6 geschaltet ist.

Alternativ ergibt sich ein rein elektromotorischer Fahrbetrieb, wenn das elektromaschinenseitige Schaltelement S in seine erste Schaltstellung S1 geschaltet ist und zum Beispiel die, die dritte Gangstufe bildende Radebene RE6 geschaltet ist. In dieser Konstellation lässt sich das Fahrzeug auch im Rekuperations-/Segel-/Boost-Betrieb betreiben.

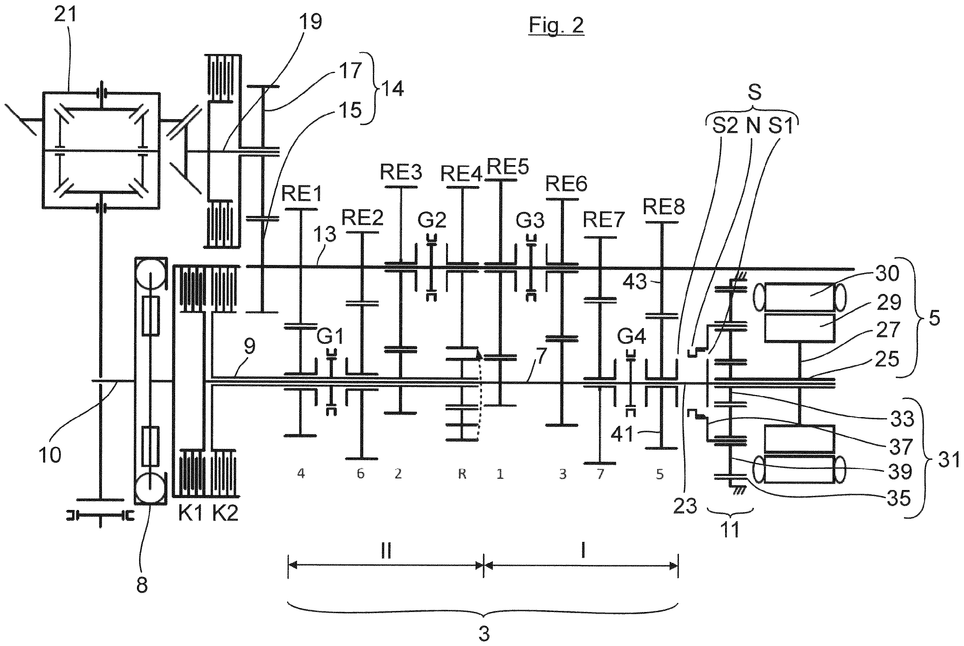

In der Figur 2 ist in einer Ansicht entsprechend der Figur 1 eine zweite Ausführungsvariante gezeigt, die im Wesentlichen identisch mit der in der Figur 1 gezeigten Getriebestruktur 1 ist. Im Unterschied zur Figur 1 bildet in der Figur 2 die elektromaschinenseitige Radebene RE8 nicht den siebten Gang, sondern vielmehr den fünften Gang, während die siebte Radebene RE7 den siebten Gang bildet. Das heißt das in der Figur 2 die siebte und fünfte Gangstufe lagemäßig ausgetauscht sind.

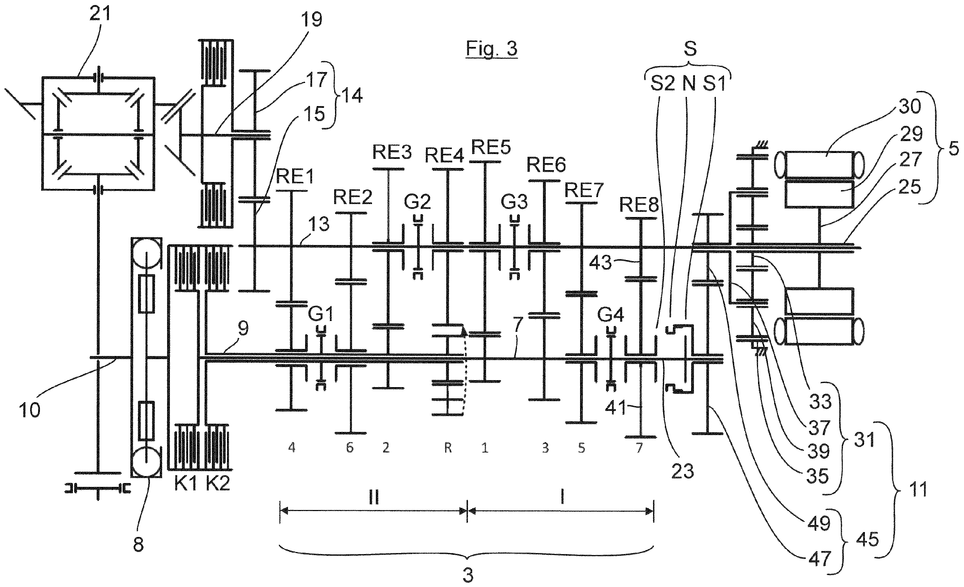

In der in der Figur 3 gezeigten Ausführungsvariante ist die Elektromaschinenwelle 25 - im Unterschied zur Figur 1 - nicht mehr koaxial auf der elektromaschinenseitigen (das heißt ersten) Eingangswelle 7 angeordnet, sondern vielmehr achsparallel dazu auf der gemeinsamen Antriebswelle 13 angeordnet. Auf der Abtriebswelle 13 sitzt außerdem die Planetengetriebestufe 31, die Bestandteil des Vorgeleges 11 ist. Das Vorgelege 11 weist in der Figur 3 zusätzlich eine Stirnradstufe 45 auf, deren antriebsseitiges Zahnrad 47 als Loszahnrad auf der ersten Eingangswelle 7 drehgelagert ist. Das antriebsseitige Loszahnrad 47 ist mittels des elektromaschinenseitiges Schaltelementes S1 entweder mit der elektromaschinenseitigen Eingangswelle 7 (Schaltstellung S1) oder mit der Abtriebswelle 13 (Schaltstellung S2) koppelbar. In der Figur 3 ist der Steg 37 der Planetengetriebestufe 31 des Vorgeleges 11 mit einem koaxial auf der Abtriebswelle 13 gelagerten Loszahnrad 49 der Stirnradstufe 45 drehfest verbunden.

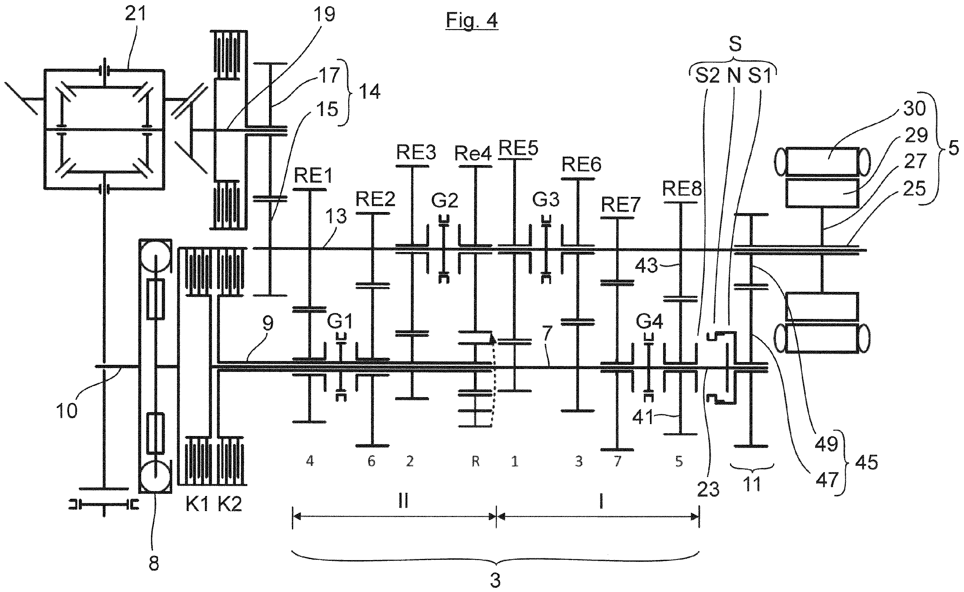

In der Figur 4 ist das Vorgelege 11 - im Unterschied zur Figur 3 - alleine aus der Stirnradstufe 45, das heißt ohne Planentengetriebestufe 31, ausgebildet. Hierzu weist die Stirnradstufe 45, wie auch in der Figur 3, das antriebsseitige Zahnrad 47 auf, das als ein Loszahnrad auf der ersten Eingangswelle 7 drehgelagert ist. Das antriebsseitige Loszahnrad 47 ist mittels des elektromaschinenseitiges Schaltelementes S entweder mit der ersten Eingangswelle 7 (Schaltstellung S1) oder mit der Abtriebswelle 13 (Schaltstellung S2) koppelbar. Im Unterschied zur Figur 3 ist jedoch in der Figur 4 das abtriebsseitige Zahnrad 49 als ein Festzahnrad drehfest auf der Elektromaschinenwelle 25 angeordnet.

## Patentansprüche

1. Hybridantriebsstrang für ein hybridgetriebenes Fahrzeug, mit einer Elektromaschine (5) und einer Brennkraftmaschine (1), deren Kraftabgabewelle (10) über zwei Trennkupplungen (K1, K2) einer Doppelkupplung alternierend entweder auf eine erste Eingangswelle (7) oder auf eine dazu koaxiale zweite Eingangswelle (9) eines Doppelkupplungstriebes (3) abtreibt, wobei mit den Eingangswellen (7, 9) jeweils ein erstes und ein zweites Teilgetriebe (I, II) aktivierbar ist, und wobei auf den beiden Eingangswellen (7, 9) und einer dazu achsparallelen gemeinsamen Abtriebswelle (13) in Radebenen (RE1 bis RE8) Fest- und Loszahnräder angeordnet sind, die unter Bildung von Gangstufen (1 bis 7, R) zu Zahnradsätzen zusammengefasst sind, in denen die Loszahnräder mittels Gangschaltelementen (G1 bis G4) mit den Wellen (7, 9, 13) koppelbar sind, wobei die Elektromaschine (5) über ein Vorgelege (11) auf eine (7) der Eingangswellen (7, 9) wirkt, wobei zwischen der Elektromaschine (5) und der damit zusammenwirkenden elektromaschinenseitigen Eingangswelle (7) ein elektromaschinenseitiges Schaltelement (S) zwischengeschaltet ist, das in einer ersten Schaltstellung (S1) die Elektromaschine (5) mit der elektromaschinenseitigen Eingangswelle (7) koppelt und in einer Neutralstellung (N) die Elektromaschine (5) von dem Doppelkupplungsgetriebe (3) entkoppelt, wobei das elektromaschinenseitige Schaltelement (S) in eine zweite Schaltstellung (S2) schaltbar ist, in der die Elektromaschine (5) mit der Abtriebswelle (13) gekoppelt ist und von der elektromaschinenseitigen Eingangswelle (7) entkoppelt ist, und wobei das elektromaschinenseitige Schaltelement (S) aus seiner Neutralstellung (N) in Axialrichtung beidseitig entweder in seine erste Schaltstellung (S1) oder dazu gegenläufig in seine zweite Schaltstellung (S2) schaltbar ist,
**dadurch gekennzeichnet, dass** das elektromaschinenseitige Schaltelement (S) auf der elektromaschinenseitigen Eingangswelle (7) angeordnet ist, und dass an dem elektromaschinenseitigen Schaltelement (S) in Axialrichtung unmittelbar eine, eine Gangstufe der Gangstufen (1 bis 7, R) bildende elektromaschinenseitige Radebene (RE8) angrenzt, die ein auf der elektromaschinenseitigen Eingangswelle (7) gelagertes antriebsseitiges Loszahnrad (41) aufweist, und dass in der zweiten Schaltstellung (S2) das Loszahnrad (41) der elektromaschinenseitigen Radebene (RE8) mit der Elektromaschine (5) gekoppelt ist, um eine Elektromaschinen-Anbindung an die Abtriebswelle (13) bereitzustellen.

2. Hybridantriebsstrang nach Anspruch 1, **dadurch gekennzeichnet, dass** das Vorgelege (11) eine von sämtlichen Gangstufen (G1 bis G4) separate Planetengetriebestufe (31) und/oder eine Stirnradstufe (45) aufweist.

3. Hybridantriebsstrang nach Anspruch 1, **dadurch gekennzeichnet, dass** das antriebsseitige Loszahnrad (41) der elektromaschinenseitigen Radebene (RE8) für eine Gangschaltung mittels eines zugeordneten Gangschaltelements (G4) mit der elektromaschinenseitigen Eingangswelle (7) koppelbar ist.

4. Hybridantriebsstrang nach einem der vorhergehenden Ansprüche, **dadurch gekennzeichnet, dass** das erste Teilgetriebe (I) und das zweite Teilgetriebe (II) in Axialrichtung nebeneinander angeordnet sind, und dass das erste Teilgetriebe (I) unter Zwischenlage des zweiten Teilgetriebes (II) axial von der Doppelkupplung (K1, K2) beabstandet ist, und/oder dass die elektromaschinenseitige Eingangswelle (7) eine Vollwelle ist, die koaxial innerhalb der als Hohlwelle ausgebildeten zweiten Eingangswelle (9) angeordnet ist.

5. Hybridantriebsstrang nach Anspruch 4, **dadurch gekennzeichnet, dass** die elektromaschinenseitige Eingangswelle (7) in axialer Verlängerung über das erste Teilgetriebe (I) hinaus mit einem Endstück (23) verlängert ist, auf dem das elektromaschinenseitige Schaltelement (S) sitzt, und dass das Endstück (23) in der ersten Schaltstellung (S1) des elektromaschinenseitigen Schaltelements (S) mit der Elektromaschine (5) gekoppelt ist.

6. Hybridantriebsstrang nach einem der vorhergehenden Ansprüche, **dadurch gekennzeichnet, dass** das elektromaschinenseitige Schaltelement (S) in axialer Flucht zwischen der in der Axialrichtung getriebeäußeren elektromaschinenseitigen Radebene (RE8) und dem Vorgelege (11) der Elektromaschine (5) angeordnet ist, und/oder dass sämtliche Radebenen (RE1 bis RE8) axial hintereinander im Doppelkupplungsgetriebe (3) angeordnet sind, und dass die Doppelkupplung (K1, K2) an einem axial äußeren Getriebeende angeordnet ist und die Elektromaschine (5) am axial gegenüberliegenden äußeren Getriebeende angeordnet ist.

7. Hybridantriebsstrang nach einem der vorhergehenden Ansprüche, **dadurch gekennzeichnet, dass** die Elektromaschine (5) mit ihrer Elektromaschinenwelle (25) koaxial zur elektromaschinenseitigen Eingangswelle (7) oder koaxial zur Abtriebswelle (13) angeordnet ist.

8. Hybridantriebsstrang nach einem der vorhergehenden Ansprüche, **dadurch gekennzeichnet, dass** das Vorgelege (11) eine Planetengetriebestufe (31) mit einem Sonnenrad (33) sowie einem radial äußeren Hohlrad (35) und zwischengeordneten Planetenrädern (39) aufweist.

9. Hybridantriebsstrang nach den Ansprüchen 5 und 7 oder 5, 7 und 8, **dadurch gekennzeichnet, dass** die Elektromaschinenwelle (25) eine Hohlwelle ist, die auf der elektromaschinenseitigen Eingangswelle (7), nämlich auf deren Endstück (23), oder auf der Abtriebswelle (13) koaxial gelagert ist, und/oder dass auf der Elektromaschinenwelle (25) ein Zahnrad (33; 49) des Vorgeleges (11) drehfest angeordnet ist.

10. Hybridantriebsstrang nach Anspruch 8 und 9, **dadurch gekennzeichnet, dass** das Sonnenrad (33) drehfest auf der Elektromaschinenwelle (25) angeordnet ist sowie das radial äußere Hohlrad (35) gehäusefest angeordnet ist, und dass in der ersten Schaltstellung (S1) des elektromaschinenseitigen Schaltelements (S) ein die Planetenräder (39) tragender Steg (37) mit der elektromaschinenseitigen Eingangswelle (7) gekoppelt ist, und dass in der zweiten Schaltstellung (S2) des elektromaschinenseitigen Schaltelements (S) der die Planetenräder (39) tragende Steg (37) mit dem antriebsseitigen Loszahnrad (41) der elektromaschinenseitigen Radebene (RE8) gekoppelt ist.

11. Hybridantriebsstrang nach Anspruch 7, **dadurch gekennzeichnet, dass** die Elektromaschinenwelle (25) auf der Abtriebswelle (13) koaxial gelagert ist, und dass das Vorgelege (11) eine Stirnradstufe (45) aufweist, deren antriebsseitiges Zahnrad (47) als ein Loszahnrad auf der elektromaschinenseitigen Eingangswelle (7) gelagert ist, und dass in der ersten Schaltstellung (S1) des elektromaschinenseitigen Schaltelements (S) das antriebsseitige Loszahnrad (47) der Stirnradstufe (45) mit der elektromaschinenseitigen Eingangswelle (7) gekoppelt ist, und dass in der zweiten Schaltstellung (S2) des elektromaschinenseitigen Schaltelements (S) das antriebsseitige Loszahnrad (47) der Stirnradstufe (45) mit dem antriebsseitigen Loszahnrad (41) der elektromaschinenseitigen Radebene (RE8) gekoppelt ist.

12. Hybridantriebsstrang nach Anspruch 10 und 11, **dadurch gekennzeichnet, dass** das Vorgelege (11) sowohl die Stirnradstufe (45) als auch die Planetengetriebestufe (31) aufweist, und dass der Steg (37) der Planetenräder (39) mit einem abtriebsseitigen, koaxial auf der Abtriebswelle (13) gelagerten Loszahnrad (49) der Stirnradstufe (45) drehfest verbunden ist.

13. Hybridantriebsstrang nach Anspruch 11, **dadurch gekennzeichnet, dass** das Vorgelege (11) ausschließlich die Stirnradstufe (45) aufweist, deren abtriebsseitiges Zahnrad (49) als ein Festzahnrad drehfest auf der Elektromaschinenwelle (25) angeordnet ist.

## Claims

1. Hybrid drive train for a hybrid vehicle, having an electric motor (5) and an internal combustion engine (1), the power output shaft (10) of which acts alternatingly either on a first input shaft (7) or on a coaxial second input shaft (9) of a dual clutch transmission (3) via two separating clutches (K1, K2) of a dual clutch, wherein a respective first and second sub-transmission (I, II) can be activated using the input shafts (7, 9), and wherein fixed and idler gears are arranged in wheel planes (RE1 to RE8) on the two input shafts (7, 9) and an axially parallel common output shaft (13), which gears are combined into gear sets forming gear stages (1 to 7, R), in which the idler gears can be coupled to the shafts (7, 9, 13) by means of gear shifting elements (G1 to G4), wherein the electric motor (5) acts on one (7) of the input shafts (7, 9) via an intermediate gear (11), wherein an electric motor-side shifting element (S) is interposed between the electric motor (5) and the cooperating electric motor-side input shaft (7), which shifting element, in a first shifting position (S1), couples the electric motor (5) to the electric motor-side input shaft (7) and, in a neutral position (N), decouples the electric motor (5) from the dual clutch transmission (3), wherein the electric motor-side shifting element (S) can be shifted into a second shifting position (S2), in which the electric motor (5) is coupled to the output shaft (13) and decoupled from the electric motor-side input shaft (7), and wherein the electric motor-side shifting element (S) can be shifted from its neutral position (N) in an axial direction on both sides either into its first shifting position (S1) or in the opposite direction into its second shifting position (S2),
**characterised in that** the electric motor-side shifting element (S) is arranged on the electric motor-side input shaft (7), and that an electric motor-side wheel plane (RE8) forming a gear stage of the gear stages (1 to 7, R), which has drive-side idler gear (41) mounted on the electric motor-side input shaft (7), is directly adjacent in an axial direction to the electric motor-side shifting element (S), and that, in the second shifting position (S2), the idler gear (41) of the electric motor-side wheel plane (RE8) is coupled to the electric motor (5), in order to provide an electric motor connection to the output shaft (13).

2. Hybrid drive train according to claim 1, **characterised in that** the intermediate gear (11) has a planetary gear stage (31) and/or a spur gear stage (45) separate from all gear stages (G1 to G4).

3. Hybrid drive train according to claim 1, **characterised in that** the drive-side idler gear (41) of the electric motor-side wheel plane (RE8) can be coupled to the electric motor-side input shaft (7) for a gear shift by means of an assigned gear shifting element (G4).

4. Hybrid drive train according to any of the preceding claims, **characterised in that** the first sub-transmission (I) and the second sub-transmission (II) are arranged side by side in an axial direction, and that the first sub-transmission (I) is spaced apart axially from the dual clutch (K1, K2) with the interposition of the second sub-transmission (II), and/or that the electric motor-side input shaft (7) is a solid shaft, which is arranged coaxially inside the second input shaft (9) that is designed as a hollow shaft.

5. Hybrid drive train according to claim 4, **characterised in that** the electric motor-side input shaft (7) is extended in an axial elongation beyond the first sub-transmission (I) with an end piece (23), on which the electric motor-side shifting element (S) sits, and that the end piece (23) is connected to the electric motor (5) in the first shifting position (S1) of the electric motor-side shifting element (S).

6. Hybrid drive train according to any of the preceding claims, **characterised in that** the electric motor-side shifting element (S) is arranged in axial alignment between the transmission-external electric motor-side wheel plane (RE8) aligned in an axial direction and the intermediate gear (11) of the electric motor (5), and/or that all wheel planes (RE1 to RE8) are arranged axially in succession in the dual clutch transmission (3), and that the dual clutch (K1, K2) is arranged on an axial external transmission end and the electric motor (5) is arranged on the axially opposite external transmission end.

7. Hybrid drive train according to any of the preceding claims, **characterised in that** the electric motor (5) with its electric motor shaft (25) is arranged coaxially to the electric motor-side input shaft (7) or coaxially to the output shaft (13).

8. Hybrid drive train according to any of the preceding claims, **characterised in that** the intermediate gear (11) has a planetary gear stage (31) with a sun gear (33) as well as a radial external ring gear (35) and interposed planetary gears (39).

9. Hybrid drive train according to claims 5 and 7 or 5, 7 and 8, **characterised in that** the electric motor shaft (25) is a hollow shaft, which is coaxially mounted on the electric motor-side input shaft (7), namely on its end piece (23), or on the output shaft (13), and/or that a gear (33, 49) of the intermediate gear (11) is non-rotatably mounted on the electric motor shaft (25).

10. Hybrid drive train according to claim 8 and 9, **characterised in that** the sun gear (33) is non-rotatably mounted on the electric motor shaft (25) and the radial external ring gear (35) is arranged integrally with the housing, and that, in the first shifting position (S1) of the electric motor-side shifting element (S), a web (37) supporting the planetary gears (39) is coupled to the electric motor-side input shaft (7), and that, in the second shifting position (S2) of the electric motor-side shifting element (S), the web (37) supporting the planetary gears (39) is coupled to the drive-side idler gear (41) of the electric motor-side wheel plane (RE8).

11. Hybrid drive train according to claim 7, **characterised in that** the electric motor shaft (25) is coaxially mounted on the output shaft (13), and that the intermediate gear (11) has a spur gear stage (45), the drive-side gear (47) of which is mounted as an idler gear on the electric motor-side input shaft (7), and that, in the first shifting position (S1) of the electric motor-side shifting element (S), the drive-side idler gear (47) of the spur gear stage (45) is coupled to the electric motor-side input shaft (7), and that, in the second shifting position (S2) of the electric motor-side shifting element (S), the drive-side idler gear (47) of the spur gear stage (45) is coupled to the drive-side idler gear (41) of the electric motor-side wheel plane (RE8).

12. Hybrid drive train according to claim 10 and 11, **characterised in that** the intermediate gear (11) has both the spur gear stage (45) and the planetary gear stage (31), and that the web (37) of the planetary gears (39) is non-rotatably connected to an output-side idler gear (49) of the spur gear stage (45) that is coaxially mounted on the output shaft (13).

13. Hybrid drive train according to claim 11, **characterised in that** the intermediate gear (11) only has the spur gear stage (45), the output-side gear (49) of which is non-rotatably mounted as a fixed gear on the electric motor shaft (25).

## Revendications

1. Chaîne cinématique hybride pour un véhicule à propulsion hybride, comprenant un moteur électrique (5) et un moteur à combustion interne (1), dont l'arbre de sortie moteur (10) est entraîné alternativement sur un premier arbre d'entrée (7) ou sur un second arbre d'entrée (9), coaxial par rapport audit premier arbre d'entrée, d'une transmission à embrayage double (3) par l'intermédiaire de deux découpleurs (K1, K2) d'un embrayage double, dans laquelle respectivement des premier et second soussystèmes de transmission (I, II) peuvent être activés avec les arbres d'entrée (7, 9), et dans laquelle des roues fixes et des roues folles sont agencées dans des plans d'engrenage (RE1 à RE8) sur les deux arbres d'entrée (7, 9) et sur un arbre de sortie (13) commun dont l'axe est parallèle auxdits arbres d'entrée et, afin de former des étages de rapport (1 à 7, R), sont combinées sous forme de train d'engrenages au sein desquels les roues folles peuvent être couplées aux arbres (7, 9, 13) au moyen d'éléments de changement de rapport (G1 à G4), dans laquelle le moteur électrique (5) agit sur un (7) des arbres d'entrée (7, 9) par l'intermédiaire d'une transmission intermédiaire (11), dans laquelle un élément de changement (S) situé côté moteur électrique, qui, dans une première position de changement (S1), couple le moteur électrique (5) à l'arbre d'entrée (7) situé côté moteur électrique et, dans une position neutre (N), découple le moteur électrique (5) par rapport à la transmission à embrayage double (3), est interposé entre le moteur électrique (5) et l'arbre d'entrée (7) situé côté moteur électrique et coopérant avec celui-ci, dans laquelle l'élément de changement (S) situé côté moteur électrique peut être commuté dans une seconde position de changement (S2) où le moteur électrique (5) est couplé à l'arbre de sortie (13) et est découplé par rapport à l'arbre d'entrée (7) situé côté moteur électrique, et dans laquelle l'élément de changement (S) situé côté moteur électrique peut, à partir de sa position neutre (N), être commuté des deux côtés dans la direction axiale soit jusqu'à sa première position de changement (S1) soit à l'inverse jusqu'à sa seconde position de changement (S2),
**caractérisée en ce que** l'élément de changement (S) situé côté moteur électrique est agencé sur l'arbre d'entrée (7) situé côté moteur électrique,
et **en ce qu'**un plan d'engrenage (RE8) situé côté moteur électrique, formant un étage de rapport parmi les étages de rapport (1 à 7, R) et présentant une roue folle (41) située côté entraînement et montée sur l'arbre d'entrée (7) situé côté moteur électrique, est immédiatement contigu dans la direction axiale à l'élément de changement (S) situé côté moteur électrique, et **en ce que**, dans la seconde position de changement (S2), la roue folle (41) du plan d'engrenage (RE8) situé côté moteur électrique est couplée à la moteur électrique (5) afin de fournir une liaison avec la moteur électrique au niveau de l'arbre de sortie (13).

2. Chaîne cinématique hybride selon la revendication 1, **caractérisée en ce que** la transmission intermédiaire (11) présente un étage d'engrenage planétaire (31) séparé de l'ensemble des étages de rapport (G1 à G4) et/ou un étage à roue droite (45).

3. Chaîne cinématique hybride selon la revendication 1, **caractérisée en ce que** la roue folle (41), située côté entraînement, du plan d'engrenage (RE8) situé côté moteur électrique peut être couplée à l'arbre d'entrée (7) situé côté moteur électrique au moyen d'un élément de changement de rapport (G4) associé, en vue d'un changement de rapport.

4. Chaîne cinématique hybride selon l'une quelconque des revendications précédentes, **caractérisée en ce que** le premier sous-système de transmission (I) et le second sous-système de transmission (II) sont agencés l'un à côté de l'autre dans la direction axiale, et **en ce que** le premier sous-système de transmission (I) est espacé de manière axiale par rapport à l'embrayage double (K1, K2) grâce à l'interposition du second sous-système de transmission (II), et/ou **en ce que** l'arbre d'entrée (7) situé côté moteur électrique est un arbre plein agencé de manière coaxiale à l'intérieur du second arbre d'entrée (9) réalisé sous forme d'arbre creux.

5. Chaîne cinématique hybride selon la revendication 4, **caractérisée en ce que** l'arbre d'entrée (7) situé côté moteur électrique est prolongé de manière axiale au-delà du premier sous-système de transmission (I) par une pièce d'extrémité (23) sur laquelle se trouve l'élément de changement (S) situé côté moteur électrique, et **en ce que** la pièce d'extrémité (23) est couplée à la moteur électrique (5) dans la première position de changement (S1) de l'élément de changement (S) situé côté moteur électrique.

6. Chaîne cinématique hybride selon l'une quelconque des revendications précédentes, **caractérisée en ce que** l'élément de changement (S) situé côté moteur électrique est agencé en alignement axial entre le plan d'engrenage (RE8), situé côté moteur électrique et extérieur à l'engrenage dans la direction axiale, et la transmission intermédiaire (11) de la moteur électrique (5), et/ou **en ce que** l'ensemble des plans d'engrenage (RE1 à RE8) sont agencés les uns derrière les autres de manière axiale dans la transmission à embrayage double (3), et **en ce que** l'embrayage double (K1, K2) est agencé au niveau d'une extrémité de transmission axialement extérieure et la moteur électrique (5) est agencée au niveau de l'extrémité de transmission axialement extérieure opposée.

7. Chaîne cinématique hybride selon l'une quelconque des revendications précédentes, **caractérisée en ce que** la moteur électrique (5) avec son arbre de moteur électrique (25) est agencée de manière coaxiale par rapport à l'arbre d'entrée (7) situé côté moteur électrique ou de manière coaxiale par rapport à l'arbre de sortie (13).

8. Chaîne cinématique hybride selon l'une quelconque des revendications précédentes, **caractérisée en ce que** la transmission intermédiaire (11) présente un étage d'engrenage planétaire (31) avec une roue solaire (33) et une couronne (35) radialement extérieure et des roues planétaires (39) intercalées.

9. Chaîne cinématique hybride selon les revendications 5 et 7 ou 5, 7 et 8, **caractérisée en ce que** l'arbre de moteur électrique (25) est un arbre creux qui est monté de manière coaxiale sur l'arbre d'entrée (7) situé côté moteur électrique, à savoir sur sa pièce d'extrémité (23), ou sur l'arbre de sortie (13), et/ou **en ce qu'**une roue dentée (33 ; 49) de la transmission intermédiaire (11) est agencée de manière solidaire en rotation sur l'arbre de moteur électrique (25).

10. Chaîne cinématique hybride selon les revendications 8 et 9, **caractérisée en ce que** la roue solaire (33) est agencée de manière solidaire en rotation sur l'arbre de moteur électrique (25) et la couronne (35) radialement extérieure est agencée de manière solidaire du carter, et **en ce que**, dans la première position de changement (S1) de l'élément de changement (S) situé côté moteur électrique, une nervure (37) supportant les roues planétaires (39) est couplée à l'arbre d'entrée (7) situé côté moteur électrique, et **en ce que**, dans la seconde position de changement (S2) de l'élément de changement (S) situé côté moteur électrique, la nervure (37) supportant les roues planétaires (39) est couplée à la roue folle (41) située côté entraînement du plan d'engrenage (RE8) situé côté moteur électrique.

11. Chaîne cinématique hybride selon la revendication 7, **caractérisée en ce que** l'arbre de moteur électrique (25) est monté de manière coaxiale sur l'arbre de sortie (13), et **en ce que** la transmission intermédiaire (11) présente un étage à roue droite (45) dont la roue (47) située côté entraînement est montée en tant que roue folle sur l'arbre d'entrée (7) situé côté moteur électrique, et **en ce que**, dans la première position de changement (S1) de l'élément de changement (S) situé côté moteur électrique, la roue folle (47), située côté entraînement, de l'étage à roue droite (45) est couplée à l'arbre d'entrée (7) situé côté moteur électrique, et **en ce que**, dans la seconde position de changement (S2) de l'élément de changement (S) situé côté moteur électrique, la roue folle (47), située côté entraînement, de l'étage à roue droite (45) est couplée à la roue folle (41), située côté entraînement, du plan d'engrenage (RE8) situé côté moteur électrique.

12. Chaîne cinématique hybride selon les revendications 10 et 11, **caractérisée en ce que** la transmission intermédiaire (11) présente à la fois l'étage à roue droite (45) et l'étage d'engrenage planétaire (31), et **en ce que** la nervure (37) des roues planétaires (39) est reliée de manière solidaire en rotation à une roue folle (49), située côté sortie et montée de manière coaxiale sur l'arbre de sortie (13), de l'étage à roue droite (45).

13. Chaîne cinématique hybride selon la revendication 11, **caractérisée en ce que** la transmission intermédiaire (11) présente exclusivement l'étage à roue droite (45) dont la roue (49) située côté sortie est agencée de manière solidaire en rotation sur l'arbre de moteur électrique (25).
